# NEW EUROPEAN PATENT SPECIFICATION

(11) **EP 3 696 392 B2**
(45) Date of publication and mention of the opposition decision: **25.12.2024**
(45) Mention of the grant of the patent: 20.04.2022
(21) Application number: 20157024.9
(22) Date of filing: 12.02.2020
(51) Int. Cl.: F02C 7/32

(54) **ANGLE ACCESSORY GEARBOX FOR GAS TURBINE ENGINE**
WINKELHILFSGETRIEBE FÜR EIN GASTURBINENTRIEBWERK
BOÎTE DE VITESSES ACCESSOIRE À ANGLE POUR MOTEUR À TURBINE À GAZ

(30) Priority: 13.02.2019 US 201916274360
(43) Date of publication of application: 19.08.2020
(73) Proprietor: RTX Corporation, Farmington, CT 06032 (US)
(72) Inventor: DUONG, Hung, Unionville, CT Connecticut 06085 (US); MULDOON, Marc J., Marlborough, CT Connecticut 06447 (US); SUCIU, Gabriel L., Glastonbury, CT Connecticut 06033 (US); POLLY, Joseph H., Tolland, CT Connecticut 06084 (US); LEQUE, Nicholas D., Vernon, CT Connecticut 06066 (US)
(74) Representative: Dehns

(56) References cited:
- EP-A1- 1 574 687
- EP-A1- 1 574 688
- EP-A1- 3 388 650
- EP-A1- 3 431 738
- EP-B1- 1 574 688
- FR-A1- 2 921 423

## Description

### BACKGROUND

This application relates to an accessory gearbox for a gas turbine engine with an angle input.

Gas turbine engines are known and typically include a fan delivering air into a bypass duct as propulsion air and into a compressor section. Air is compressed in the compressor section and delivered into a combustor where it is mixed with fuel and ignited. Products of this combustion pass downstream over turbine rotors driving them to rotate.

The turbine rotors drive a number of accessories associated with the gas turbine engine, or perhaps an associated aircraft through a tower shaft.

It is known for a gas turbine engine to have two spools, with a first rotating at lower speeds and lower pressures, and a second rotating at higher speeds and higher pressures. It has been proposed to drive accessories from tower shafts driven by each of the two spools.

As gas turbine engines become smaller, packaging for the gearboxes that transmit drive from the tower shafts to the various auxiliary systems becomes a challenge.

Documents EP 1574688, EP 1574687 and FR 2921423 disclose prior art gas turbine engines.

### SUMMARY

In an embodiment according to claim 1, a gas turbine engine includes a low speed input shaft connected to a low speed tower shaft, in turn connected to a lower speed spool and a high speed input connected to a high speed tower shaft, in turn connected to a higher speed spool. The low speed input shaft is connected to drive a first plurality of accessories. The high speed input shaft is connected to drive a second plurality of accessories. The high speed tower shaft and the low speed tower shaft are coaxial and rotate about a common axis. An angle drive is provided into the low speed input shaft and the high speed input shaft, respectively.

The first plurality of accessories rotate about a first set of rotational axes, which are parallel to each other but spaced along an axial input direction and are perpendicular to a first plane. The second plurality of accessories rotate about a second set of rotational axes, which are parallel to each other and spaced along an axial input direction and perpendicular to a second plane. The first and second planes extend in opposed directions away from a drive input axis of the high speed input shaft and the low speed input shaft.

The low speed input shaft and the high speed input shaft are concentric.

In another embodiment according to any of the previous embodiments, the high speed input shaft is hollow and the low speed input shaft is positioned within the high speed input shaft.

In another embodiment according to any of the previous embodiments, the high speed tower shaft is received within the low speed tower shaft.

In another embodiment according to any of the previous embodiments, each of the low speed and high speed tower shafts drive a bevel gear to in turn drive a bevel gear connected to the low speed input shaft and low speed output shaft.

In another embodiment according to any of the previous embodiments, a drive axis of the low speed tower shaft and the high speed tower shaft is at a non-perpendicular and non-parallel angle relative to a drive axis of the low speed input shaft and the high speed input shaft.

In another embodiment according to any of the previous embodiments, the angle is between 5° and 85°.

In another embodiment according to any of the previous embodiments, each of the low speed and high speed input shafts drive a bevel gear and, in turn, the bevel gears drive gears to drive the first plurality of accessories and the second plurality of accessories, respectively.

In another embodiment according to any of the previous embodiments, each of the bevel gears drive a gear, which is engaged to drive another gear, and the another gear engaged to drive a third gear.

In another embodiment according to any of the previous embodiments, an input gear for the low speed input shaft drives a first shaft with a plurality of bevel gears, with each of the bevel gears driving an associated drive gear for one of the first plurality of accessories. An input gear for the higher speed shaft drives a second shaft with a plurality of bevel gears which each bevel gears driving an associated to drive the drive gears associated for one of the second plurality of accessories.

These and other features may be best understood from the following drawings and specification.

### BRIEF DESCRIPTION OF THE DRAWINGS

Figure 1 schematically shows a gas turbine engine.
Figure 2A shows an accessory gearbox.
Figure 2B shows a feature of an angle drive.
Figure 2C shows a geometric relationship.
Figure 3A shows drive details.
Figure 3B schematically shows geometric relationships.
Figure 3C shows a detail of an input.
Figure 3D shows further details of the input.
Figure 4 shows an alternative drive.

### DETAILED DESCRIPTION

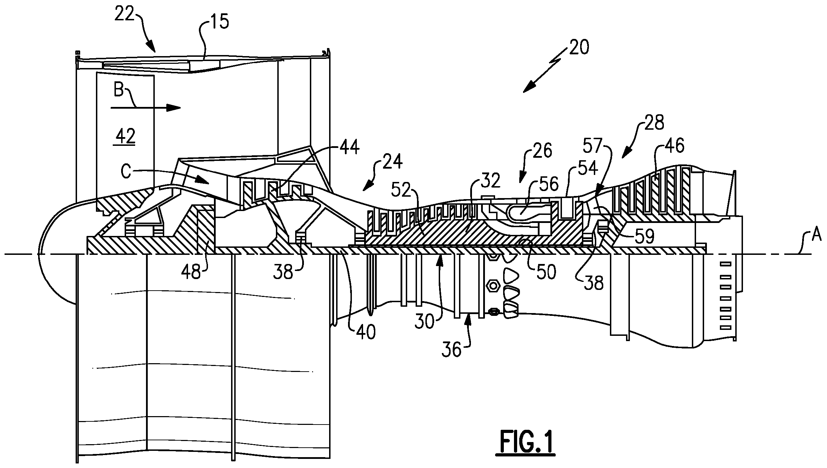

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)] ^{0.5}(where °R = K x 9/5). The "Low corrected fan tip speed" as disclosed herein according to one non-limiting embodiment is less than about 1150 ft / second (350.5 meters/second).

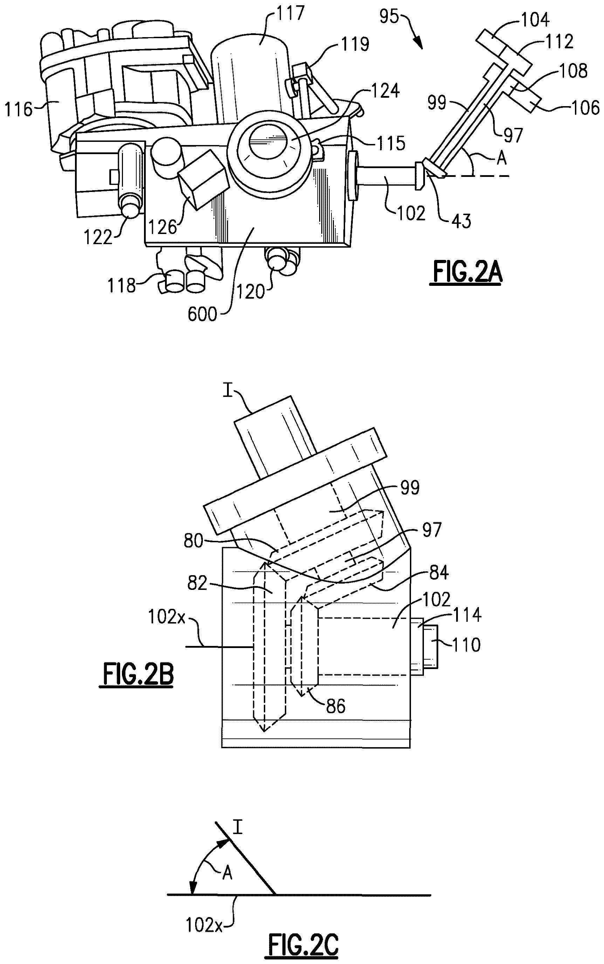

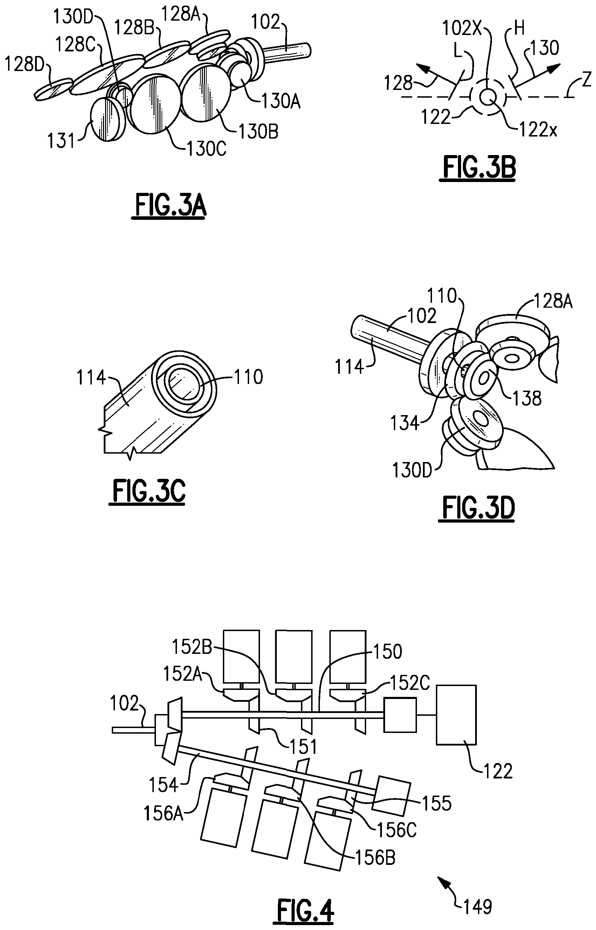

An accessory gearbox 95 and drive system is illustrated in Figure 2A. An input shaft 102 includes concentric high and low speed input shafts 110/114 (see Figures 2B and 3C). As can be appreciated, the low speed input shaft 114 is driven by a low speed tower shaft 97 which is driven through a gear 112, which is driven through a gear 104 (shown schematically) which will rotate with the low speed spool. The high speed tower shaft 99 includes a gear 108 which is driven by a gear 106 which rotates with the high speed spool (again shown schematically). As shown, the drive shafts 99 and 97 extend in at an angle A (Fig. 2C) relative to a rotational or drive axis 102x of the input shaft 102. The angle A is not 90 or 180 degrees. That is, the combined shafts 97/99 and the input shaft 102 are not perpendicular or parallel.

As will be explained below, the accessories may include a generator 116, a variable transmission 117, an air turbine starter 124, a de-oiler 115, an oil pump 120, a hydraulic pump 118, and a fuel pump 126. Also, an intercooled cooling air boost compressor 122 is illustrated. In one embodiment, generator 116, transmission 117, a rotator tool 119, the oil pump 120, and the hydraulic pump 118 may all be driven by the low speed tower shaft 97. The de-oiler 115, air turbine starter 124, fuel pump 126, and the boost compressor 122 and a permanent magnet alternator (not shown) may be driven by the high speed tower shaft 99.

Figure 2B shows the angle drive in more detail. The low speed tower shaft 97 drives a gear 84 which is a bevel gear and engages a gear 86 to drive the low speed input shaft 114. The high speed tower shaft 99 drives the bevel gear 80 which is engaged to and drives a bevel gear 82 to in turn drive the high speed input shaft 110.

Notably, while the low speed input shaft 114 is concentric with and received outside the high speed input shaft 110, the opposite is true of the shafts 97 and 99 in the angle drive input 95. Here the low speed tower shaft 97 is inside of the high speed tower shaft 99. In other embodiments, the high speed input shaft 110 is concentric with and received outside the low speed input shaft 114, and/or the high speed tower shaft 99 is inside of the low speed tower shaft 97.

A rotation axis I of the shafts 97 and 99 is shown at the angle A in Figure 2C relative to a drive axis 102x of the shafts 114 and 110.

In embodiment, the angle A may be between 5° and 85°.

Notably, this disclosure has particular application for an accessory gearbox in a two spool engine, and wherein the low speed input shaft is driven by a low spool which also drives a fan through a gear reduction. Such low speed spools can have a wide speed excursion, and say on the order of 80%.

Figure 3A shows the input shaft 102. The high speed input shaft 110 (Figs. 2B and 3C) drives gears 130A, 130B, 130C, and 130D. These gears all, in turn, drive the accessory such as shown in Figure 2A. A bevel gear at the end of the gear 130D drives another gear 131, which is the drive gear for the boost compressor 122.

The low speed input shaft 114 (Figs. 2B and 3C) drives a plurality of gears 128A, 128B, 128C, and 128D. These gears then drive the several low speed driven auxiliary systems.

As can be appreciated from Figure 3B, the gearbox could be said to be a V gearbox. The V gearbox is defined by two planes L and H. Gearbox plane L includes a plurality of rotational axes 128 of the gears 128A-128D. Plane H is the same, but with the rotational axes 130 of the gears 130A-130D. The axes 128 extend perpendicularly through the plane L and are parallel to each other. The same is true for the axes 130 in plane H. The planes L, H can be seen to define angles relative to a plane Z, which bisects the rotational axis 102X of the shafts 110 and 114. As can be appreciated, the angles defined by the planes L, H extend in opposed directions relative to the axis 102X. As is also shown in this figure, the boost compressor 122 rotates about a drive axis 122x, which is concentric with the axis 102X.

All of this is received within a single gearbox 600 (see Figure 2A). While the illustrated embodiments have the axes concentric, the axes need not be concentric, or even parallel.

Figure 3C shows the high speed input shaft 110 packaged within the low speed input shaft 114.

Figure 3D shows a gear 138, which is driven by the shaft 110 to, in turn, engage and drive the gear 130D, and then the other gears as shown in Figure 3A. Similarly, a bevel gear 134 driven by shaft 114 drives gear 128A and, in turn, the other gears.

Figure 4 shows an alternative embodiment 149. In embodiment 149, the input 102 drives a first shaft 150 extending along an axis and driving a plurality of bevel gears 151, which engage and drive a plurality of gears 152A-152C. In a sense, this arrangement replaces the engaged gears 130A-130D. Similarly, a shaft 154 drives bevel gears 155, which engage and drive a plurality of gears 156A-156C. In this arrangement, the boost compressor 122 is shown driven at the end of the shaft 150. Although the input 102 is not shown here it may be structured as in Figure 3D.

In combination, the V transmission and the packaging of the boost compressor 122 such that it is driven on an axis which is distinct from the axes 128/130 in planes L, H provides more compact packaging, while adding the additional boost compressor 122.

A gas turbine engine under this disclosure has a low speed input shaft connected to a low speed tower shaft, in turn connected to a lower speed spool and a high speed input connected to a high speed tower shaft, in turn connected to a higher speed spool, the low speed input shaft being connected to drive a first plurality of accessories. The high speed input shaft is connected to drive a second plurality of accessories. The first plurality of accessories rotate about a first set of rotational axes, which are parallel to each other but spaced along an axial input direction and are perpendicular to a first plane. The second plurality of accessories rotate about a second set of rotational axes, which are parallel to each other and spaced along an axial input direction and perpendicular to a second plane. The first and second planes extend in opposed directions away from a drive input axis of the high speed input shaft and the low speed input shaft. The high speed tower shaft and the low speed tower shaft are coaxial and rotating about a common axis, and provide an angle drive into the low speed input shaft and the high speed input shaft, respectively.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A gas turbine engine (20) comprising:
a low speed input shaft (114) connected to a low speed tower shaft (97), in turn connected to a lower speed spool (30) and a high speed input shaft (110) connected to a high speed tower shaft (99), in turn connected to a higher speed spool (32), said low speed input shaft (114) being connected to drive a first plurality of accessories, and said high speed input shaft (110) connected to drive a second plurality of accessories; and
said high speed tower shaft (99) and said low speed tower shaft (97) being coaxial and rotating about a common axis (I), and providing an angle drive into said low speed input shaft (114) and said high speed input shaft (110), respectively;
wherein said first plurality of accessories rotating about a first set of rotational axes (128), which are parallel to each other but spaced along an axial input direction and are perpendicular to a first plane (L) and said second plurality of accessories rotating about a second set of rotational axes (130), which are parallel to each other and spaced along an axial input direction and perpendicular to a second plane (H), said first and second planes (L, H) extending in opposed directions away from a drive input axis (102x) of said high speed input shaft (110) and said low speed input shaft (114); and
wherein said low speed input shaft (114) and said high speed input shaft (110) are concentric.

2. The gas turbine engine (20) as set forth in claim 1, wherein said high speed input shaft (110) is hollow and said low speed input shaft (114) is positioned within or outside said high speed input shaft (110).

3. The gas turbine engine (20) as set forth in claim 1 or 2, wherein said high speed tower shaft (99) is received within or outside said low speed tower shaft (97).

4. The gas turbine engine (20) as set forth in any preceding claim, wherein each of said low speed and high speed tower shafts (97, 99) driving a bevel gear (84, 80) to in turn drive a bevel gear (86, 82) connected to said low speed input shaft (110) and said high speed input shaft (110).

5. The gas turbine engine (20) as set forth in any preceding claim, wherein a drive axis (I) of said low speed tower shaft (97) and said high speed tower shaft (99) is at a non-perpendicular and non-parallel angle (A) relative to a drive axis (102x) of said low speed input shaft (114) and said high speed input shaft (110).

6. The gas turbine engine (20) as set forth in claim 5, wherein said angle (A) is between 5° and 85°.

7. The gas turbine engine (20) as set forth in any preceding claim, wherein each of said low speed and high speed input shafts (114, 110) drives a bevel gear (134, 138) and, in turn, said bevel gears (134, 138) drive gears (128A-D, 130A-D) to drive said first plurality of accessories and said second plurality of accessories, respectively.

8. The gas turbine engine (20) as set forth in claim 7, wherein each of said bevel gears (134, 138) drive a gear (128A, 130A), which is engaged to drive another gear (128B, 130B), and said another gear (128B, 130B) engaged to drive a third gear (128C, 130C).

9. The gas turbine engine (20) as set forth in any preceding claim, wherein an input gear for said low speed input shaft (114) driving a first shaft (150) with a plurality of bevel gears (151), with each of said bevel gears (151) driving an associated drive gear (152A-C) for one of said first plurality of accessories, and an input gear for said high speed input shaft (110) driving a second shaft (154) with a plurality of bevel gears (155) which each bevel gears (155) driving an associated drive gear (156A-C) associated for one of said second plurality of accessories.

## Patentansprüche

1. Gasturbinentriebwerk (20), umfassend:
eine Eingangswelle mit niedriger Drehzahl (114), die mit einer Turmwelle mit niedriger Drehzahl (97) verbunden ist, die wiederum mit einer Spule mit niedrigerer Drehzahl (30) verbunden ist, und eine Eingangswelle mit hoher Drehzahl (110), die mit einer Turmwelle mit hoher Drehzahl (99) verbunden ist, die wiederum mit einer Spule mit höherer Drehzahl (32) verbunden ist, wobei die Eingangswelle mit niedriger Drehzahl (114) verbunden ist, um eine erste Vielzahl von Hilfsvorrichtungen anzutreiben und die Eingangswelle mit hoher Drehzahl (110) verbunden ist, um eine zweite Vielzahl von Hilfsvorrichtungen anzutreiben; und
wobei die Turmwelle mit hoher Drehzahl (99) und die Turmwelle mit niedriger Drehzahl (97) koaxial sind und sich um eine gemeinsame Achse (I) drehen und einen Winkelantrieb in die Eingangswelle mit niedriger Drehzahl (114) bzw. die Eingangswelle mit hoher Drehzahl (110) bereitstellen;
wobei sich die erste Vielzahl von Hilfsvorrichtungen um einen ersten Satz von Rotationsachsen (128) dreht, die parallel zueinander, aber entlang einer axialen Eingangsrichtung beabstandet und senkrecht zu einer erste Ebene (L) sind, und sich die zweite Vielzahl von Hilfsvorrichtungen um einen zweiten Satz von Rotationsachsen (130) dreht, die parallel zueinander und entlang einer axialen Eingangsrichtung beabstandet und senkrecht zu einer zweiten Ebene (H) sind, wobei sich die erste und die zweite Ebene (L, H) in entgegengesetzte Richtungen von einer Antriebseingangsachse (102x) der Eingangswelle mit hoher Drehzahl (110) und der Eingangswelle mit niedriger Drehzahl (114) weg erstrecken; und
wobei die Eingangswelle mit niedriger Drehzahl (114) und die Eingangswelle mit hoher Drehzahl (110) konzentrisch sind.

2. Gasturbinentriebwerk (20) nach Anspruch 1, wobei die Eingangswelle mit hoher Drehzahl (110) hohl ist und die Eingangswelle mit niedriger Drehzahl (114) innerhalb oder außerhalb der Eingangswelle mit hoher Drehzahl (110) positioniert ist.

3. Gasturbinentriebwerk (20) nach Anspruch 1 oder 2, wobei die Turmwelle mit hoher Drehzahl (99) innerhalb oder außerhalb der Turmwelle mit niedriger Drehzahl (97) aufgenommen ist.

4. Gasturbinentriebwerk (20) nach einem der vorhergehenden Ansprüche, wobei jede der Turmwellen mit niedriger Drehzahl und mit hoher Drehzahl (97, 99) ein Kegelrad (84, 80) antreibt, um wiederum ein Kegelrad (86, 82) anzutreiben, das mit der Eingangswelle mit niedriger Drehzahl (110) und der Eingangswelle mit hoher Drehzahl (110) verbunden ist.

5. Gasturbinentriebwerk (20) nach einem der vorhergehenden Ansprüche, wobei eine Antriebsachse (I) der Turmwelle mit niedriger Drehzahl (97) und der Turmwelle mit hoher Drehzahl (99) in einem nicht rechtwinkligen und nicht parallelen Winkel (A) relativ zu einer Antriebsachse (102x) der Eingangswelle mit niedriger Drehzahl (114) und der Eingangswelle mit hoher Drehzahl (110) ist.

6. Gasturbinentriebwerk (20) nach Anspruch 5, wobei der Winkel (A) zwischen 5° und 85° liegt.

7. Gasturbinentriebwerk (20) nach einem der vorhergehenden Ansprüche, wobei jede der Eingangswellen mit niedriger Drehzahl und mit hoher Drehzahl (114, 110) ein Kegelrad (134, 138) antreibt und die Kegelräder (134, 138) wiederum Zahnräder (128A-D, 130A-D) antreiben, um die erste Vielzahl von Hilfsvorrichtungen bzw. die zweite Vielzahl von Hilfsvorrichtungen anzutreiben.

8. Gasturbinentriebwerk (20) nach Anspruch 7, wobei jedes der Kegelräder (134, 138) ein Zahnrad (128A, 130A) antreibt, das in Eingriff genommen wird, um ein anderes Zahnrad (128B, 130B) anzutreiben, und das andere Zahnrad (128B, 130B) in Eingriff genommen wird, um ein drittes Zahnrad (128C, 130C) anzutreiben.

9. Gasturbinentriebwerk (20) nach einem der vorhergehenden Ansprüche, wobei ein Eingangszahnrad für die Eingangswelle mit niedriger Drehzahl (114) eine erste Welle (150) mit einer Vielzahl von Kegelrädern (151) antreibt, wobei jedes der Kegelräder (151) ein zugeordnetes Antriebszahnrad (152A-C) für eine der ersten Vielzahl von Hilfsvorrichtungen antreibt und ein Eingangszahnrad für die Eingangswelle mit hoher Drehzahl (110) eine zweite Welle (154) mit einer Vielzahl von Kegelrädern (155) antreibt, wobei jedes Kegelrad (155) ein zugehöriges Antriebszahnrad (156A-C) antreibt, das einer der zweiten Vielzahl von Hilfsvorrichtungen zugeordnet ist.

## Revendications

1. Moteur à turbine à gaz (20) comprenant :
un arbre d'entrée à basse vitesse (114) connecté à un arbre de tour à basse vitesse (97), à son tour connecté à une bobine à vitesse inférieure (30) et à un arbre d'entrée à grande vitesse (110) connecté à un arbre de tour à grande vitesse (99), à son tour connecté à une bobine à vitesse supérieure (32), ledit arbre d'entrée à basse vitesse (114) étant connecté pour entraîner une première pluralité d'accessoires, et ledit arbre d'entrée à grande vitesse (110) étant connecté pour entraîner une seconde pluralité d'accessoires ; et
ledit arbre de tour à grande vitesse (99) et ledit arbre de tour à basse vitesse (97) étant coaxiaux et tournant autour d'un axe commun (I), et fournissant un entraînement angulaire dans ledit arbre d'entrée à basse vitesse (114) et ledit arbre d'entrée à grande vitesse (110), respectivement ;
dans lequel ladite première pluralité d'accessoires tournant autour d'un premier ensemble d'axes de rotation (128), qui sont parallèles les uns aux autres mais espacés le long d'une direction d'entrée axiale et sont perpendiculaires à un premier plan (L) et ladite seconde pluralité d'accessoires tournant autour d'un second ensemble d'axes de rotation (130), qui sont parallèles les uns aux autres et espacés le long d'une direction d'entrée axiale et perpendiculaires à un second plan (H), lesdits premier et second plans (L, H) s'étendant dans des directions opposées à partir d'un axe d'entrée d'entraînement (102x) dudit arbre d'entrée à grande vitesse (110) et dudit arbre d'entrée à basse vitesse (114) ; et
dans lequel ledit arbre d'entrée à basse vitesse (114) et ledit arbre d'entrée à grande vitesse (110) sont concentriques.

2. Moteur à turbine à gaz (20) selon la revendication 1, dans lequel ledit arbre d'entrée à grande vitesse (110) est creux et ledit arbre d'entrée à basse vitesse (114) est positionné à l'intérieur ou à l'extérieur dudit arbre d'entrée à grande vitesse (110).

3. Moteur à turbine à gaz (20) selon la revendication 1 ou 2, dans lequel ledit arbre de tour à grande vitesse (99) est reçu à l'intérieur ou à l'extérieur dudit arbre de tour à basse vitesse (97).

4. Moteur à turbine à gaz (20) selon une quelconque revendication précédente, dans lequel chacun desdits arbres de tour à basse vitesse et à grande vitesse (97, 99) entraînant un engrenage conique (84, 80) pour entraîner à son tour un engrenage conique (86, 82) connecté audit arbre d'entrée à basse vitesse (110) et audit arbre d'entrée à grande vitesse (110).

5. Moteur à turbine à gaz (20) selon une quelconque revendication précédente, dans lequel un axe d'entraînement (I) dudit arbre de tour à basse vitesse (97) et dudit arbre de tour à grande vitesse (99) est à un angle non perpendiculaire et non parallèle (A) par rapport à un axe d'entraînement (102x) dudit arbre d'entrée à basse vitesse (114) et dudit arbre d'entrée à grande vitesse (110).

6. Moteur à turbine à gaz (20) selon la revendication 5, dans lequel ledit angle (A) est compris entre 5° et 85°.

7. Moteur à turbine à gaz (20) selon une quelconque revendication précédente, dans lequel chacun desdits arbres d'entrée à basse vitesse et à grande vitesse (114, 110) entraîne un engrenage conique (134, 138) et, à leur tour, lesdits engrenages coniques (134, 138) des engrenages d'entraînement (128A-D, 130A-D) pour entraîner ladite première pluralité d'accessoires et ladite seconde pluralité d'accessoires, respectivement.

8. Moteur à turbine à gaz (20) selon la revendication 7, dans lequel chacun desdits engrenages coniques (134, 138) entraîne un engrenage (128A, 130A), qui est en prise pour entraîner un autre engrenage (128B, 130B), et ledit autre engrenage (128B, 130B) en prise pour entraîner un troisième engrenage (128C, 130C) .

9. Moteur à turbine à gaz (20) selon une quelconque revendication précédente, dans lequel un engrenage d'entrée pour ledit arbre d'entrée à basse vitesse (114) entraînant un premier arbre (150) avec une pluralité d'engrenages coniques (151), chacun desdits engrenages coniques (151) entraînant un engrenage d'entraînement associé (152A-C) pour l'un de ladite première pluralité d'accessoires, et un engrenage d'entrée pour ledit arbre d'entrée à grande vitesse (110) entraînant un second arbre (154) avec une pluralité d'engrenages coniques (155), chacun des engrenages coniques (155) entraînant un engrenage d'entraînement associé (156A-C) associé pour l'un de ladite seconde pluralité d'accessoires.
